(19) Europäisches Patentamt
European Patent Office
Office européen des brevets

(11) Veröffentlichungsnummer: **0 332 759**
**A2**

(12) **EUROPÄISCHE PATENTANMELDUNG**

(21) Anmeldenummer: **88121481.1**

(51) Int. Cl.⁴: **F16B 7/20 , B25G 3/16**

(22) Anmeldetag: **22.12.88**

(30) Priorität: **24.12.87 IT 5022 U**
**26.01.88 IT 4714 U**

(43) Veröffentlichungstag der Anmeldung:
**20.09.89 Patentblatt 89/38**

(84) Benannte Vertragsstaaten:
**BE DE ES FR GB GR NL SE**

(71) Anmelder: **NUOVA OMEC S.r.l.**
**Via Matteotti, 9**
**I-40064 Ozzano Emilio (BO)(IT)**

(72) Erfinder: **Bordoni, Pietro**
**Via XX Settembre 26**
**I-41013 Castelfranco Emilia (MO)(IT)**

(74) Vertreter: **Gustorf, Gerhard, Dipl.-Ing.**
**Patentanwalt Dipl.-Ing. Gerhard Gustorf**
**Bachstrasse 6 A**
**D-8300 Landshut(DE)**

(54) **Vorrichtung zur axialen Befestigung für die Verbindung von Rohrstücken.**

(57) Gegenstand der Erfindung ist eine Vorrichtung zur axialen, in Querrichtung steifen Befestigung bei Bajonettkupplungen, insbesondere für die Verbindung von Rohrstücken von Besenstielen oder dgl., wobei das Aufnahmeende (8) eines Rohrstücks wenigstens einen nach innen ragenden Vorsprung (5) aufweist, dem eine Nut (6) im Zapfenende (3) des anderen Rohrstücks zugeordnet ist, welche aus einem ersten, axialen Abschnitt (7) und einem daran anschließenden, zweiten, schrägen Abschnitt (8) zusammengesetzt ist, der dieselbe Schrägstellung wie der Vorsprung (5) hat und dessen Nuttiefe zum Nutende hin abnimmt.

1
5
9
a2
FIG-1

2
3
8
6
7
4
a1
FIG-2

EP 0 332 759 A2

# Vorrichtung zur axialen Befestigung für die Verbindung von Rohrstücken

Die Erfindung betrifft eine Vorrichtung zur axialen, in Querrichtung steifen Befestigung bei Bajonettkupplungen, insbesondere für die Verbindung von Rohrstücken von Besenstielen oder Stielen ähnlicher Reinigungsgeräte

Bei modernen und inzwischen weit verbreiteten Ausführungsformen von Besenstielen oder Stielen ähnlicher Reinigungsgeräte wird als Werkstoff Rohr aus Leichtmetall verwendet, das im allgemeinen mit Kunststoff beschichtet ist.

Derartige Metallstiele sind immer häufiger aus einer Mehrzahl von Rohrstücken zusammengesetzt, um auf diese Weise die Länge verändern und an den jeweiligen Gebrauchszweck anpassen zu können und/oder um die Verpackung, die Lagerung und den Transport zu erleichtern.

Zur Verbindung der Rohrstücke untereinander und mit dem Gerät, z.B. dem Besen, sind im allgemeinen Bajonettkupplungen vorgesehen, bei denen ein verjüngtes Ende (Zapfenende) in ein Aufnahmeende des anderen Rohrstücks eingreift. Dabei hat jedes Rohrstück ein verjüngtes Zapfenende und ein im Durchmesser nicht zurückgesetztes Aufnahmeende, so daß die Rohrstücke ineinander eingesetzt werden können, um die gewünschte Länge herzustellen.

Es sind unterschiedliche Systeme bekannt, um die Rohrstücke in Längsrichtung, d.h. in axialer Richtung miteinander zu verbinden, damit sich die Bajonettkupplungen während des Gebrauches nicht lösen können.

Bei einer ersten Ausführungsform hat das verjüngte Zapfenende ein Gewinde, das durch Rollen direkt in das Material des aus Blech bestehenden Rohrstücks eingedrückt ist und das in ein entsprechendes Innengewinde eingeschraubt werden kann, welches in derselben Weise in das Aufnahmeende des anderen Rohrstücks eingearbeitet ist. Bei dieser Konstruktion besteht jedoch die Gefahr, daß nach häufigen Einschraubvorgängen, die notwendigerweise sehr fest angezogen werden, um der Kupplung die notwendige Steifigkeit zu geben, das Gewinde des Zapfenendes wegen des Fehlens eines Endanschlags zu weit in das Gewinde des Aufnahmeendes eingeschraubt wird, so daß dadurch eine Keilwirkung entsteht, die die Ränder verformt, bis ein ordnungsgemäßes Einschrauben nicht mehr möglich ist, wodurch die Kupplung aufgrund der zu großen Radial - und Umfangsspiele ihre Steifigkeit verliert.

Bei ähnlichen Konstruktionen sind die Gewinde in Abschnitte aus einem anderen Werkstoff eingearbeitet, die an den Rohrstücken angebracht sind. Bei dieser Alternative wird jedoch das gesamte System zu schwer und damit verhältnismäßig teuer.

Bei anderen Ausführungsformen des Standes der Technik hat das Zapfenende des einen Rohrstücks eine Bohrung, in der radial verstellbar ein Stift sitzt, der gegen die Kraft einer Feder innerhalb des Zapfenendes eingedrückt werden kann. Beim Zusammenbau der beiden Rohrstücke wird der Stift in die Bohrung eingedrückt, wonach er bei beendetem Zusammenfügen der beiden Rohrstücke mittels der Feder in ein Langloch gedrückt wird, das in Umfangsrichtung in das Aufnahmeende eingearbeitet ist. Damit wird eine axial feste Kupplung hergestellt. Es ist jedoch mit diesem System nicht möglich, Radialspiele oder Bewegungen in Umfangsrichtung zu vermeiden.

Um diesen Nachteil der mangelnden Steifigkeit von zusammengesetzten Rohrstücken zu vermeiden, die mit den oben erläuterten, bekannten Kupplungen untereinander verbunden sind, wurde gemäß der EP-OS 84 83 0295.6 eine Vorrichtung vorgeschlagen, bei der ein zylindrischer Ring auf dem Zapfenende vorgesehen ist, der sich ausweitet, wenn er in das Aufnahmeelement eingeschoben wird, da er über ein mit Gewinde versehenes Kegelstumpforgan, das von hinten den Ring untergreift, axial gegen einen Anschlag gedrückt wird, der an der Vorderseite des Zapfenendes vorgesehen ist. Dieser Federring, der für eine gleichmäßige Verformung einen Längsschlitz aufweist, sichert eine gute axiale Halterung in der Bajonettkupplung, ohne in Umfangsrichtung oder Radialrichtung ein Spiel zuzulassen, wodurch die gesamte Einheit sehr steif ist. Allerdings ist diese Vorrichtung verhältnismäßig teuer, insbesondere auf dem vorgesehenen Anwendungsgebiet.

Der Erfindung liegt daher die Aufgabe zugrunde, eine Vorrichtung zur axialen Sicherung von Bajonettkupplungen auf dem oben erläuterten Anwendungsgebiet zur Verfügung zu stellen, die gleichzeitig eine gute Feststellung in Umfangsrichtung ohne Spiel gestattet, ohne daß dadurch die Herstellungskosten nachteilig beeinflußt werden. Eine weitere Aufgabe besteht darin, diese Vorrichtung so auszubilden, daß sie sich nicht unbeabsichtigt lösen kann.

Bei einer Vorrichtung zur axialen, in Querrichtung steifen Befestigung bei Bajonettkupplungen, insbesondere für die Verbindung von Rohrstücken von Besenstielen oder Stielen ähnlicher Reinigungsgeräte, wird diese Aufgabe erfindungsgemäß dadurch gelöst, daß das Aufnahmeende eines Rohrstücks wenigstens einen nach innen ragenden Vorsprung aufweist, dem eine Nut im Zapfenende des anderen Rohrstücks zugeordnet ist, welche aus einem ersten, axialen Abschnitt und einem daran anschließenden, zweiten, schrägen Abschnitt zusammengesetzt ist, der dieselbe Schrägstellung wie der Vorsprung hat und dessen Nuttiefe zum Nutende hin abnimmt.

Weitere Merkmale und Vorteile der Erfindung sind Gegenstand der Patentansprüche und ergeben sich aus der folgenden Beschreibung eine Ausführungsbeispiels, das in der Zeichnung dargestellt ist.

Es zeigen:

Figuren 1 und 2 die Ansicht von zwei einander gegenüberliegenden Rohrstücken für einen Stiel in der Stellung vor dem Zusammenbau über eine Bajonettkupplung, die gemäß der Erfindung ausgebildet ist,

Figuren 3 und 4 Querschnitte des Aufnahmeendes bzw. des Zapfenendes des jeweiligen Rohrstückes,

Figuren 5 und 6 den Figuren 1 und 2 entsprechende Ansichten der beiden Rohrstücke in einer um die Längsachse verdrehten Stellung, wobei das Aufnahmeende geschnitten dargestellt ist,

Figur 7 einen Längsschnitt durch das Zapfenende und das Aufnahmeende im Augenblick des Zusammenschiebens,

Figur 8 einen Querschnitt durch das Zapfenende und das Aufnahmeende im zusammengebauten Zustand,

Figur 9 die Ansicht der beiden Rohrstücke im zusammengesteckten Zustand und

Figur 10 einen Längsschnitt durch die beiden zusammengesteckten Rohrstücke.

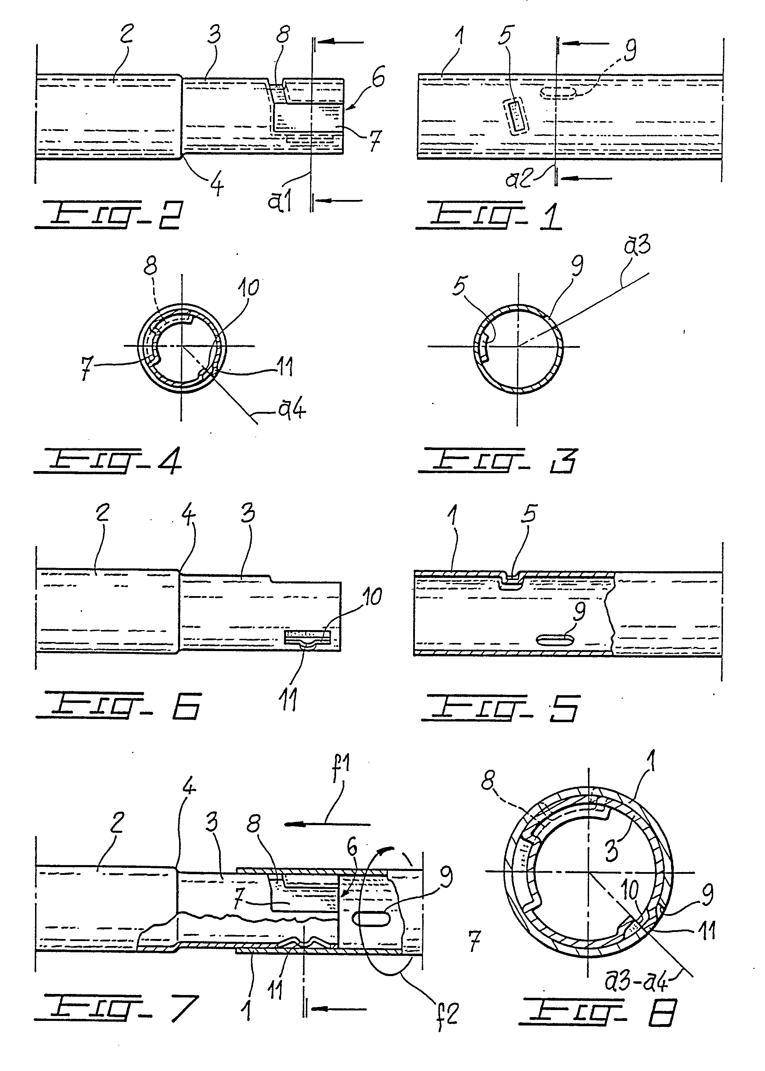

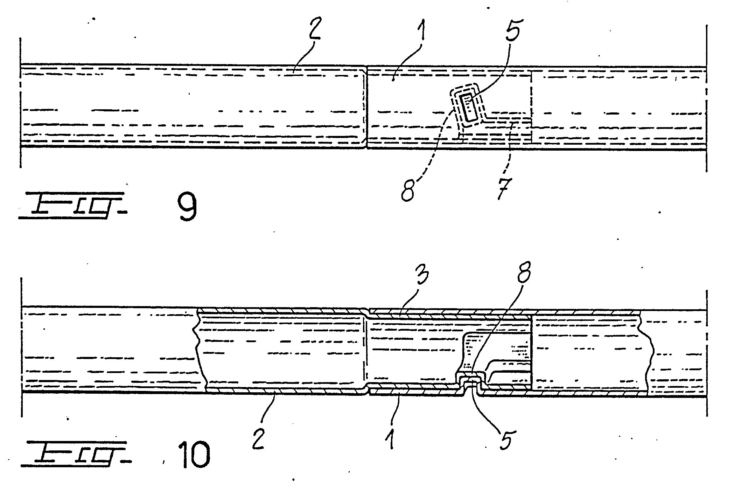

Die Figuren 1 und 2 zeigen ein Aufnahmeende 1 eines Rohrstücks mit Bajonettkupplung und einen koaxial gegenüberliegenden Endabschnitt 2 eines anderen Rohrstücks mit einem verjüngten Zapfenende 3 für die Bajonettkupplung, das in das Aufnahmeende 1 eingesteckt werden kann und dann an dessen Ende mit einer umlaufenden Schulter 4 anliegt.

In das Aufnahmeende 1 ist eine Eindrückung 5 in Tiefziehtechnik eingestanzt, die eine Rechteckform hat, wobei die beiden größeren Seiten quer zur Kupplungsachse geneigt sind. Dieser Eindrükkung 5 entspricht im Innern des Aufnahmeendes 1 (vgl. Figuren 3 und 5) ein Vorsprung 5, der selbstverständlich dieselbe Anordnung hat.

Wie Figur 2 zeigt, ist in das Zapfenende 3 des anderen Rohrstücks 2 eine Nut 6 eingedrückt, vorzugsweise ebenfalls nach Art der Tiefziehtechnik. Die Nut 6 hat einen ersten Abschnitt 7, der sich in axialer Richtung bezüglich der Kupplung erstreckt und dessen Tiefe und Breite so bemessen sind, daß er die Vorderfront des Vorsprungs 5 in der nachstehend erläuterten Weise aufnehmen kann. Im Anschluß an diesen axialen Abschnitt 7 folgt in der Nut 6 ein zweiter Abschnitt 8, der denselben Schrägverlauf in Querrichtung hat wie der Vorsprung 5 und dessen Breite so groß ist, daß er den Vorsprung 5 an seiner kleineren Seite aufnehmen kann. Die Tiefe des schrägen Abschnitts 8 ist am Anfang genauso groß wie diejenige des axialen Abschnitts 7, verringert sich jedoch allmählich, worauf weiter unten ebenfalls noch eingegangen wird.

In das Aufnahmeende 1 ist gemäß Figur 1 ein Langloch 9 eingearbeitet, das sich in Längsrichtung erstreckt und in das Material des Rohrstücks eingeschnitten ist. In Figur 1 ist das Langloch 9 gestrichelt eingezeichnet, da es hier verdeckt ist und auf der Rückseite liegt, wie die Figuren 3 und 5 zeigen, aus denen sich ergibt, daß das Langloch 9 dem Vorsprung 5 radial etwa gegenüberliegt.

Gemäß Figur 6 ist in das Zapfenende 3 ein in Längsrichtung verlaufendes Einschnittsegment 10 eingearbeitet, dessen in Drehrichtung des Aufnahmeendes 1 im Uhrzeigersinn (Pfeil f2 in Figur 7) vorderer Rand ausgeklinkt und bezüglich des Rohrstücks nach außen gewölbt ist, wodurch ein Vorsprung 11 gebildet wird. Der andere Rand des Einschnittsegments 10 ist hingegen nach innen ausgeklinkt, was in Figur 4 gezeigt ist und später noch erläutert wird.

Die Vorrichtung gemäß der Erfindung arbeitet in der folgenden Weise:

Das Aufnahmeende 1 und das Zapfenende 3 der Bajonettkupplung gemäß der Erfindung werden koaxial gegenüberliegend so angeordnet, daß gemäß den Figuren 1 und 2 der nach innen vorstehende Vorsprung 5 des Aufnahmeendes 1 dem Einschubende der Nut 6 gegenüberliegt, die in das Zapfenende 3 eingearbeitet ist. Dann werden die beiden Rohrstücke 1 und 3 in Richtung des Pfeiles f1 der Figur 7 zusammengesetzt, wozu das Zapfenende 3 in das Aufnahmeende 1 so eingeschoben wird, daß der Vorsprung 5 in den axialen Abschnitt 7 der Nut 6 eingreift.

Wenn der Vorsprung 5 das Ende des axialen Abschnitts 7 der Nut erreicht hat, wird das Aufnahmeende 1 in Richtung des Pfeiles f2 der Figur 7 im Uhrzeigersinn um etwa eine Viertel Drehung gedreht. Auf diese Weise greift der Vorsprung 5 in den schrägen Abschnitt 8 der Nut 6 ein, der dieselbe Schrägstellung wie der Vorsprung 5 hat (vgl. Figur 9). Bei dieser Schraubbewegung wird die Kupplung axial festgelegt.

Da die Tiefe des schrägen Abschnitts 8 der Nut 6 zum Ende hin abnimmt, wird der Vorsprung 5 allmählich eingeklemmt, bis er in dem Abschnitt 8 blockiert ist (vgl. Figur 10), wodurch die Kupplung sehr steif wird und kein Radialspiel bzw. kein Spiel in Umfangsrichtung zuläßt. Diese Eigenschaft der besonders guten Steifigkeit läßt auch nach einer mehr oder weniger großen Einsatzdauer nicht nach, was beim Stand der Technik der Fall ist, denn der Vorsprung 5 bleibt in dem Nutabschnitt 8 immer eingeklemmt, da dessen Tiefe zum Nutende hin abnimmt, ohne daß der Rand des Aufnahmeendes 1 kraft- oder formschlüssig gegen die ringförmige Schulter 4 des Zapfenendes 3 gepreßt wird oder auf diese auflaufen muß.

Selbstverständlich kann das Aufnahmeende 1 der Bajonettkupplung mehrere Vorrichtungen gemäß der Erfindung aufweisen, beispielsweise zwei oder noch mehr Vorsprünge 5, die mit zwei oder entsprechend mehr Nuten 6 am Zapfenende 3 zusammenwirken.

Gleichzeitig mit der oben erläuterten Zusammenfügung der beiden Rohrstücke gelangt auch der Vorsprung 11 am Zapfenende 3 in das Aufnahmeende 1, wobei er zunächst durch dieses aufgrund der Elastizität des Einschnittsegmentes 10 elastisch zusammengedrückt wird (vgl. Figur 7).

Bei der entsprechende Anordnung des Langlochs 9 und des Vorsprungs 11 sowohl in Längsrichtung (in den Figuren 1 und 2 durch die Achsen a1 und a2 angedeutet) als auch in Umfangsrichtung (in den Figuren 3 und 4 durch die Achsen a3 und a4 dargestellt) liegt am Ende der oben erläuterten Drehung im Uhrzeigersinn gemäß Pfeil f2 in Figur 7, wenn der Vorsprung 5 in den axialen Nutabschnitt 8 eingreift, das Langloch 9 über dem Vorsprung 11, so daß dieser elastisch in das Langloch 9 einschnappt. Da der ausgeklinkte Vorsprung 11 an dem Rand des Langlochs 9 anliegt, ist ein Lösen durch eine einfache Schraubbewegung nicht möglich. Die Vorrichtung gemäß der Erfindung ist somit eine robuste Kupplung für die genannten Fälle, so daß die Rohrstücke, beispielsweise für Besenstiele, axial fest miteinander verbunden werden, wobei auch in Umfangsrichtung nach längerem Gebrauch eine vorzügliche Verbindung ohne Spiel gesichert ist, die ein unbeabsichtigtes Lösen verhindert. Da keine zusätzlichen Einrichtungen oder Werkstoffe erforderlich sind, kann die Herstellung mit geringen Kosten vorgenommen werden, da sie auf den einfachen Bearbeitungsverfahren wie Prägen, Tiefziehen, Schneiden und Biegen beruht.

## Ansprüche

1. Vorrichtung zur axialen, in Querrichtung steifen Befestigung bei Bajonettkupplungen, insbesondere für die Verbindung von Rohrstücken von Besenstielen oder Stielen ähnlicher Reinigungsgeräte, dadurch **gekennzeichnet,** daß das Aufnahmeende (1) eines Rohrstückes wenigstens einen nach innen ragenden Vorsprung (5) aufweist, dem eine Nut (6) im Zapfenende (3) des anderen Rohrstückes zugeordnet ist, welche aus einem ersten, axialen Abschnitt (7) und einem daran anschließenden, zweiten, schrägen Abschnitt (8) zusammengesetzt ist, der dieselbe Schrägstellung wie der Vorsprung (5) hat und dessen Nuttiefe zum Nutende hin abnimmt.

2. Vorrichtung nach Anspruch 1, dadurch gekennzeichnet, daß der Vorsprung (5) und die Nut (6) in das zugehörige Rohrstück eingeprägt sind.

3. Vorrichtung nach Anspruch 1 oder 2, dadurch gekennzeichnet, daß in einem Teil der Bajonettkupplung ein Aufnahmesitz für wenigstens einen am anderen Teil der Kupplung ausgebildeten Vorsprung (11) ausgebildet ist, der in tangentialer Richtung in den Aufnahmesitz eingreift.

4. Vorrichtung nach Anspruch 3, dadurch gekennzeichnet, daß der Aufnahmesitz ein Langloch (9) ist, das sich in Längsrichtung im Aufnahmeende (1) erstreckt, und daß der Vorsprung (11) ein nach außen vorstehender Rand eines in Längsrichtung aus dem Zapfenende (3) ausgeklinkten Einschnittssegmentes (10) ist.

2
3
8
6
7
4
a1
Fig-2
1
5
9
a2
Fig-1
8
10
7
11
a4
Fig-4
5
9
a3
Fig-3
2
4
3
10
11
Fig-6
1
5
9
Fig-5
f1
4
2
3
8
6
7
9
11
1
f2
Fig-7
8
1
3
10
9
11
a3-a4
7
Fig-8

2
1
5
8
7
Fig. 9
3
8
2
1
5
Fig. 10